# EUROPEAN PATENT APPLICATION

(11) **EP 4 333 172 A1**
(43) Date of publication of application: **06.03.2024**
(21) Application number: 21961673.7
(22) Date of filing: 25.10.2021
(51) Int. Cl.: H01M 50/202

(54) **BATTERY CELL, BATTERY, ELECTRICAL DEVICE, AND METHOD AND DEVICE FOR FABRICATING BATTERY CELL**

(71) Applicant: Contemporary Amperex Technology Co., Limited, Ningde, Fujian 352100 (CN)
(72) Inventor: LIN, Denghua, Ningde, Fujian 352100 (CN); CHEN, Xinxiang, Ningde, Fujian 352100 (CN); GUO, Zhijun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: von Tietzen und Hennig, Nikolaus
(86) International application number: PCT/CN2021/126220
(87) International publication number: WO 2023/070290

(57) **Abstract**

Embodiments of the present application provide a battery cell, a battery, a power consumption device, and a method and device for producing a battery cell. The battery cell includes: a housing having an opening; an electrode assembly accommodated in the housing; an end cover configured to cover the opening and provided with an electrode terminal; and a support, disposed in the housing, where the support and the electrode assembly are arranged in a first direction, the support and the end cover are arranged in a second direction, and the first direction is perpendicular to the second direction, the support abuts against the electrode assembly in the first direction so as to limit the electrode assembly. The support can make a structure of the battery cell more stable, and since the support abuts against the electrode assembly in the first direction, the electrode assembly can be limited, thereby preventing the electrode assembly from moving in the first direction, and improving the structural stability of the battery cell.

## Description

### TECHNICAL FIELD

The present application relates to the field of battery technologies, and in particular, to a battery cell, a battery, a power consumption device, and a method and device for producing a battery cell.

### BACKGROUND

Energy saving and emission reduction are the key to the sustainable development of the automobile industry. In this case, electric vehicles have become an important part of the sustainable development of the automobile industry due to their advantages of energy saving and environmental protection. For electric vehicles, battery technology is an important factor for their development.

A battery is mounted in a power consumption device, for example, mounted in a vehicle. The movement of the power consumption device such as the vehicle causes a certain impact on the battery. If the stability of a battery cell in the battery is not good, the impact may adversely affect the performance of the battery cell and may cause a safety problem. Therefore, how to improve the internal structure of a battery cell so as to improve the stability thereof becomes a technical problem to be solved urgently in the battery technology.

### SUMMARY

The present application provides a battery cell, a battery, a power consumption device, and a method and device for producing a battery cell, which could improve an internal structure of the battery cell and improve the structural stability of the battery cell.

In a first aspect, a battery cell is provided, including a housing having an opening; an electrode assembly accommodated in the housing; an end cover configured to cover the opening and provided with an electrode terminal; and a support, disposed in the housing, where the support and the electrode assembly are arranged in a first direction, the support and the end cover are arranged in a second direction, and the first direction is perpendicular to the second direction, the support abuts against the electrode assembly in the first direction so as to limit the electrode assembly.

Based on the technical solution, an electrode assembly and a support arranged in a first direction are provided in a housing of a battery cell, and an end cover of the battery cell covers the housing from a second direction so as to accommodate the support and the electrode assembly in the housing. The support can make a structure of the battery cell more stable, and since the support abuts against the electrode assembly in the first direction, the electrode assembly can be limited, thereby preventing the electrode assembly from moving in the first direction, and improving the structural stability of the battery cell.

In a possible implementation manner, a tab is provided at an end portion of the electrode assembly in the first direction, and the electrode terminal and the tab are disposed in the second direction.

The electrode terminal and the tab of the electrode assembly are disposed in the second direction, and the electrode terminal and the tab may share a space in the second direction, which reduces space waste in the first direction, thereby making the structure of the battery cell more compact.

In a possible implementation manner, an accommodating groove is provided on a side of the support facing the end cover, and the accommodating groove is configured to accommodate part of the tab.

Since the support is provided with an accommodating groove configured to accommodate the tab, when the tab is located in the accommodating groove, the tab and the support may share a space without occupying an extra space, so that the structure of the battery cell is more compact, and the space utilization rate of the battery cell is improved.

In a possible implementation manner, in the first direction, a width difference exists between a region of the support abutting against the electrode assembly and a region of the support corresponding to the accommodating groove, so as to form an avoidance space between the support and the electrode assembly, where the avoidance space is configured to accommodate part of the tab.

When the support abuts against the electrode assembly in the first direction, part of the tab may be damaged. To this end, an avoidance space is designed in a region of the support corresponding to the accommodating groove to accommodate a portion of the tab abutting against the support, thereby avoiding the damage to the tab, and prolonging he service life of the battery cell.

In a possible implementation manner, the support further includes a blocking part, and the blocking part is configured to isolate the tab from the housing in the first direction, so as to prevent a short circuit between the tab and the housing.

In a possible implementation manner, the battery cell further includes: a connecting member, where the connecting member is configured to electrically connect the tab of the electrode assembly to the electrode terminal, and the connecting member abuts against an end face of the support close to the end cover.

The connecting member not only can achieve the electrical connection between the tab of the electrode assembly and the electrode terminal, but also can abut against an end face of the support close to the end cover in the second direction, thereby preventing the support from moving in the second direction, and improving the structural stability of the battery cell.

In a possible implementation manner, a protruding part protruding toward the end cover is provided on an end face of the support facing the end cover, and the protruding part is configured to isolate the connecting member from the housing.

The protruding part on the support may isolate the connecting member from the housing of the battery cell, thereby preventing a short circuit between the connecting member and the housing, and improving the safety of the battery cell.

In a possible implementation manner, the battery cell further includes: a first insulating member disposed between the connecting member and the end cover and configured to isolate the end cover from the connecting member, the first insulating member being connected to the support in a snap-fit manner.

The first insulating member can isolate the end cover from the connecting member, thereby avoiding a short circuit between the end cover and the connecting member, and improving the safety of the battery cell. The first insulating member is connected to the support in a snap-fit manner, which can improve the stability of the internal structure of the battery cell.

In a possible implementation manner, the first insulating member is provided with a snap, and the support is provided with a notch, and the snap is snap-fitted with the notch so as to connect the first insulating member to the support in a snap-fit manner.

The snap of the first insulating member is snap-fitted with the notch of the support, which can not only enable the first insulating member to be fixed on the support, but also enable the support to be flexibly detached.

In a possible implementation manner, the support is provided with an avoidance hole, and the avoidance hole is disposed corresponding to a liquid injection hole of the battery cell and is communicated with an inner portion of the battery cell.

The setting of the avoidance hole can avoid the influence of the support on a liquid injection process of the battery cell.

In a possible implementation manner, the liquid injection hole is disposed on a first wall of the housing away from the end cover, so as to facilitate the liquid injection space required for the liquid injection process.

In a second aspect, a battery is provided, including: the battery cell in the first aspect and any possible implementation manner of the first aspect.

In a third aspect, a power consumption device is provided, including: the battery cell in the first aspect and any possible implementation manner of the first aspect, the battery cell being configured to provide electric energy.

In a fourth aspect, a method for producing a battery cell is provided, including providing an electrode assembly; providing an end cover, the end cover being provided with an electrode terminal; providing a housing, the housing having an opening; providing a support; arranging the support and the electrode assembly in a first direction, and arranging the support and the end cover in a second direction, where the first direction is perpendicular to the second direction, the support abuts against the electrode assembly in the first direction so as to limit the electrode assembly; and covering the housing with the end cover to form a cavity for accommodating the electrode assembly and the support.

In a fifth aspect, a device for producing battery cell is provided, including: a providing module, where the providing module is configured to provide a housing, an electrode assembly, an end cover, and a support, the end cover is provided with an electrode terminal, and the housing has an opening; and an assembly module, configured to: arrange the support and the electrode assembly in a first direction, and arrange the support and the end cover in a second direction, where the first direction is perpendicular to the second direction, the support abuts against the electrode assembly in the first direction so as to limit the electrode assembly; and cover the end cover with the opening, so as to accommodate the electrode assembly and the support in a cavity enclosed by the end cover and the housing.

### BRIEF DESCRIPTION OF THE DRAWINGS

To describe the technical solutions in the embodiments of the present application more clearly, the following briefly describes the accompanying drawings required for describing the embodiments of the present application. Apparently, the accompanying drawings in the following description show merely some embodiments of the present application, and a person of ordinary skill in the art may still derive other drawings from accompanying drawings without creative efforts.
FIG. 1 is a schematic structural diagram of a vehicle disclosed in an embodiment of the present application;
FIG. 2 is a schematic diagram of a schematic structural diagram of a battery disclosed in an embodiment of the present application;
FIG. 3 is an exploded view of a battery cell disclosed in an embodiment of the present application;
FIG. 4 is a top view of a battery cell disclosed in an embodiment of the present application;
FIG. 5 is a partial cross-sectional view of the battery cell in FIG. 4 in a B-B direction;
FIG. 6 is a partial cross-sectional view of the battery cell in FIG. 4 in a F-F direction;
FIG. 7 is a partial cross-sectional view of the battery cell in FIG. 4 in a C-C direction;
FIG. 8 is a schematic diagram of a positional relationship of a connecting member and a support disclosed in an embodiment of the present application;
FIG. 9 is a schematic structural diagram of a first insulating member disclosed in an embodiment of the present application;
FIG. 10 is a schematic diagram of assembly of a first insulating member and a support disclosed in an embodiment of the present application;
FIG. 11 is a schematic flowchart of a method for producing a battery according to an embodiment of the present application;
FIG. 12 is a schematic block diagram of a device for producing a battery according to an embodiment of the present application;

In accompanying drawings, the accompanying drawings are not drawn to actual scale.

### DESCRIPTION OF EMBODIMENTS

Embodiments of the present application will be further described below in detail with reference to the accompanying drawings and embodiments. The detailed description of the following embodiments and the accompanying drawings are used to exemplarily illustrate principles of the present application, but cannot be used to limit the scope of the present application, that is, the present application is not limited to the described embodiments.

In the description of the present application, it should be noted that unless otherwise stated, the meaning of "a plurality of' means two or more, orientations or positional relationships indicated by terms such as "up", "down", "left", "right", "inside" and "outside" are merely for convenience of describing the present application and for simplifying the description, but not for indicating or implying that an indicated apparatus or element must have a specific orientation and/or must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within the allowable range of error. "Parallel" is not strictly parallel, but within an allowable range of error.

The terms representing directions in the following description are all directions shown in the drawings, which is not for limiting the specific structure of the present application. In the description of the present application, it should be noted that unless otherwise explicitly specified and limited, the terms "installation", "interconnection" and "connection" should be understood in a broad sense, for example, they may either be a fixed connection, a detachable connection, or an integrated connection; and they may either be a direct connection or an indirect connection through an intermediate medium. Those of ordinary skill in the art may understand the specific meanings of the foregoing terms in the present application according to a specific situation.

The term "and/or" in the present application is only a kind of association relationship describing associated objects, which means that there may be three kinds of relationships. For example, A and/or B may mean the following three cases: A exists alone, both A and B exist at the same time, and B exists alone. In addition, the character "/" in the present application generally indicates that the associated objects before and after the character are in an "or" relationship.

Unless otherwise defined, all technical and scientific terms used herein have the same meanings as those commonly understood by those skilled in the art to which the present application belongs. The terms used in the specification of the present application are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions. In the specification and the claims or the above accompanying drawings of the present application, terms such as "first" and "second" are used for distinguishing different objects, rather than describing specific order or primary-secondary relationship.

A word "embodiment" referred to in the present application means that a particular feature, structure, or characteristic described in combination with the embodiment can be included in at least one embodiment of the present application. The appearances of the word in various places in the specification are not necessarily all referring to the same embodiment, nor are separate or alternative embodiments mutually exclusive of other embodiments. Those skilled in the art understand, in explicit and implicit manners, that an embodiment described in the present application may be combined with other embodiments.

While the present application has been described with reference to preferred embodiments, various improvements may be made and equivalents may be used to substitute parts therein without departing from the scope of the present application. In particular, as long as there is no structural conflict, technical features mentioned in various embodiments can be combined in any manner. The present application is not limited to the specific embodiments disclosed herein, but includes all technical solutions falling within the scope of the claims.

In the present application, a battery refers to a physical module that includes one or more battery cells to provide electric energy. For example, the battery mentioned in the present application may include a battery module, a battery pack, and the like. The battery generally includes a box for enclosing one or more battery cells. The box can prevent liquid or other foreign matters from affecting the charging or discharging of a battery cell.

In some embodiments, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. In some embodiments, the battery cells may also be referred to as a battery core.

The battery cell includes an electrode assembly and an electrolyte, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and a positive electrode current collector not coated with the positive electrode active material layer protrudes from the positive electrode current collector coated with the positive electrode active material layer and is used as a positive tab. Taking a lithium-ion battery as an example, the material of the positive electrode current collector may be aluminum, and the positive electrode active material may be lithium cobalt oxides, lithium iron phosphate, ternary lithium or lithium manganate, etc. The negative electrode sheet includes a negative electrode current collector and a negative electrode active material layer. The negative electrode active material layer is coated on a surface of the negative electrode current collector, and a negative electrode current collector not coated with the negative electrode active material layer protrudes from the negative electrode current collector coated with the negative electrode active material layer and is used as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together. A material of the separator may be polypropylene (PP), polyethylene (PE), or the like. In addition, the electrode assembly may be in a winding structure or a laminated structure, and the embodiments of the present application are not limited thereto.

In order to meet different power requirements, the plurality of battery cells in the battery may be in series connection, parallel connection or series-parallel connection. The series-parallel connection refers to a combination of series connection and parallel connection. In some embodiments, the plurality of battery cells may be first connected in series, in parallel or in series-parallel to form a battery module, and then a plurality of battery modules are connected in series or in parallel or in series-parallel to form a battery. That is, the plurality of battery cells may form the battery directly, or form a battery module first, and then battery modules form the battery. The battery is further disposed in the power consumption device to provide electric energy for the power consumption device.

In a box of a battery, a signal transmission component may also be included. The signal transmission component may be configured to transmit a voltage and/or temperature signal of a battery cell. The signal transmission component may include a bus component, and the bus component is configured to realize electrical connection between the plurality of battery cells, such as parallel connection, series connection or series-parallel connection. The bus component can realize the electrical connection between the battery cells by connecting electrode terminals of the battery cells. In some embodiments, the bus component may be fixed to the electrode terminals of the battery cell by welding. The bus component transmits the voltage of the battery cell, and a higher voltage will be obtained after the plurality of battery cells are connected in series. Correspondingly, the electrical connection formed by the bus component may also be referred to as "high-voltage connection".

In addition to the bus component, the signal transmission component may also include a sensor device for sensing the state of the battery cell, for example, the sensor device may be configured to measure and transmit a sensor signal such as a temperature and state of charges of the battery cell. In the embodiment of the present application, an electrical connection member within the battery may include a bus component and/or a sensor device.

The bus component and the sensor device may be encapsulated in an insulating layer to form the signal transmission component. Correspondingly, the signal transmission component can be configured to transmit a voltage and/or a sensing signal of the battery cell. The signal transmission component does not have an insulating layer at the joint with the electrode terminal of the battery cell, that is, the insulating layer has an opening here, so as to be connected with the electrode terminal of the battery cell.

With the development of the battery technology, it is necessary to consider many design factors, such as energy density, cycle life, discharge capacity, C-rate and other performance parameters. In addition, the structural stability of the battery cell also needs to be considered.

In view of this, the present application provides a technical solution. By providing a support in a battery cell, the structure of the battery cell is more stable, and by abutting against the support with an electrode assembly, the structural stability of the battery cell is improved while limiting the electrode assembly.

Technical solutions described in embodiments of the present application are applicable to various apparatuses using a battery, for example, a mobile phone, a portable device, a notebook computer, an electromobile, an electric toy, an electric tool, an electric vehicle, a ship, a spacecraft, or the like. For example, the spacecraft may include an airplane, a rocket, a space shuttle, a spaceship, and the like.

It should be understood that technical solutions described in embodiments of the present application are not only limited to the apparatus described above, but also suitable to all apparatuses using a battery. However, for the sake of brief illustration, description is made by an example of a vehicle in the following embodiments.

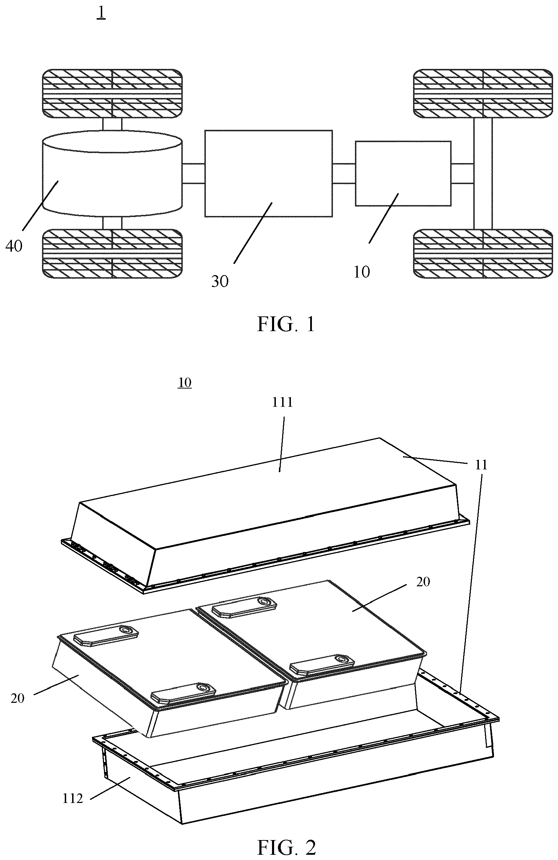

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a battery electric vehicle, a hybrid vehicle, an extended-range vehicle, or the like. A motor 40, a controller 30 and a battery 10 may be disposed inside the vehicle 1, and the controller 30 is configured to control the battery 10 to supply power to the motor 40. For example, the battery 10 may be disposed at the bottom, head or tail of the vehicle 1. The battery 10 may be used for supplying power to the vehicle 1. For example, the battery 100 may serve as an operation power supply of the vehicle 1, and is used for a circuit system of the vehicle 1, for example, for a working power demand of the vehicle 1 during startup, navigation, and running. In another embodiment of the present application, the battery 10 can not only serve as an operation power supply of the vehicle 1, but also as a driving power supply of the vehicle 1, replacing or partially replacing fuel or natural gas to provide driving power for the vehicle 1.

The battery 10 may include a plurality of battery cells. For example, as shown in FIG. 2, FIG. 2 is a schematic structural diagram of a battery 10 according to an embodiment of the present application. The battery 10 may include a plurality of battery cells 20. The battery 10 may further include a box 11, an interior of the box 11 is in a hollow structure, and the plurality of battery cells 20 are accommodated in the box 11. As shown in FIG. 2, the box 11 may include two portions, which are herein referred to as a first box 111 and a second box 112, and the first box 111 and the second box 112 cover each other. The shapes of the first box 111 and the second box 112 may be determined according to the combined shape of the plurality of battery cells 20, and at least one of the first box 111 and the second box 112 may have an opening. For example, as shown in FIG. 2, the first box 111 and the second box 112 each may be a hollow cuboid and each have only one surface as an opening face, an opening of the first box 111 is arranged opposite to an opening of the second box 112, and the first box 111 and the second box 112 are fastened to each other to form the box 11 with a closed cavity. For another example, different from what is shown in FIG. 2, only one of the first box 111 and the second box 112 may be a hollow cuboid with an opening, while the other may be a plate to cover the opening. For example, here, description is made by an example that the second box 112 is a hollow cuboid and has only one face that is an opening face, while the first box 111 is in a plate shape. Therefore, the first box 111 covers the opening of the second box 112 to form the box with a closed cavity, which can be used to accommodate the plurality of battery cells 20. The plurality of battery cells 20 are combined in parallel, in series or in series-parallel and then placed in the box 11 formed by fastening the first box 111 and the second box 112.

In some embodiments, the battery 10 may also include other structures, which will not be repeated here. For example, the battery 10 may further include a bus component (not shown in the figure), which is configured to realize electrical connection between the plurality of battery cells 20, such as parallel connection, series connection or series-parallel connection. Specifically, the bus component can realize the electrical connection between the battery cells 20 by connecting electrode terminals of the battery cells 20. Further, the bus component may be fixed to the electrode terminals of the battery cell 20 by welding. Electric energy of the plurality of battery cells 20 can be further drawn out by a conductive mechanism passing through the box. In some embodiments, the conductive mechanism may also belong to the bus component.

According to different power requirements, the number of battery cells 20 may be set to any value. The plurality of battery cells 20 may be connected in series, in parallel or in series-parallel to implement larger capacity or power. Since there may be many battery cells 20 included in each battery 10, the battery cells 20 may be arranged in groups for convenience of installation, and each group of battery cells 20 constitutes a battery module. The number of battery cells 20 included in the battery module is not limited and may be set as required. The battery may comprise a plurality of battery modules, and these battery modules may be connected in series, in parallel or in series-parallel.

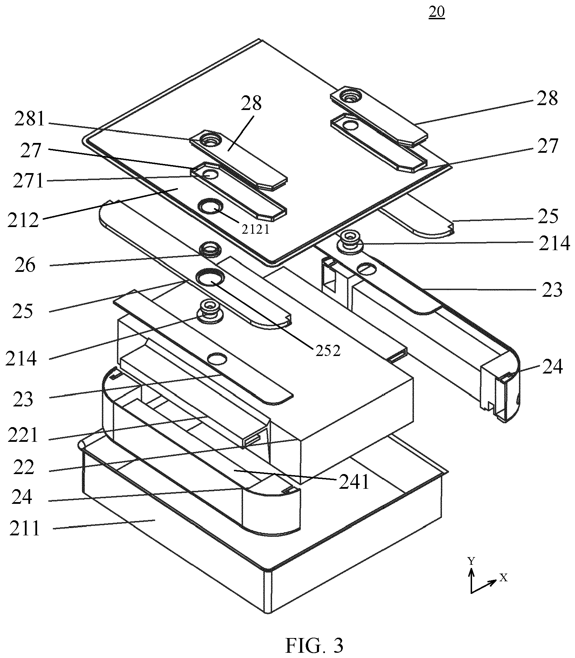

As an example, as shown in FIG. 3, FIG. 3 is a schematic structural diagram of a battery cell 20 according to an embodiment of the present application. The battery cell 20 includes one or more electrode assemblies 22, a housing 211, and an end cover 212. The housing 211 and the end cover 212 form a shell or a battery box. A wall of the housing 211 and the end cover 212 are each referred to as a wall of the battery cell 20. For the battery cell 20 of a cuboid shape, the walls of the housing 211 include a bottom wall and four side walls. The shape of the housing 211 depends on the shape of one or more electrode assemblies 22 after being combined. For example, the housing 211 may be a hollow cuboid, cube, and cylinder. The cuboid-shaped battery cell 20 may further be adjusted in length and thickness to form a blade-shaped battery cell 20. One of faces of the housing 211 has an opening such that one or more electrode assemblies 22 may be placed in the housing 211. For example, when the housing 211 is a hollow cuboid, cube, or blade shape, one of planes of the housing 211 is an open face, that is, the plane does not have a wall so that the interior and the exterior of the housing 211 communicate with each other. When the housing 211 may be a hollow cylinder, an end face of the housing 211 is an opening face, that is, the end face does not have a wall, so that the interior and the exterior of the housing 211 communicate with each other. The end cover 212 covers the opening and is connected to housing 211 to form a closed cavity in which the electrode assembly 22 is placed. The interior of the housing 211 is filled with an electrolyte, such as an electrolytic solution.

The battery cell 20 may further include an electrode terminal 214, and the electrode terminal 214 may be disposed on the end cover 212. The end cover 212 is generally in a flat plate shape, the electrode terminal 214 is fixed on a flat plate surface of the end cover 212, and the electrode terminal 214 may be a positive electrode terminal or a negative electrode terminal. The electrode terminal 214 is correspondingly provided with a connecting member 23, or may also be referred to as a current collecting member 23, which is located between the end cover 212 and the electrode assembly 22 and is configured to electrically connect the electrode assembly 22 and the electrode terminal 214.

Each electrode assembly 22 has a tab 221. The tab 221 may be a first tab 221a or a second tab 221b. The first tab 221a and the second tab 221b have opposite polarities. For example, when the first tab 221a is a positive tab, the second tab 221b is a negative tab. As shown in FIG. 3, the tab 221 of the electrode assembly 22 may be connected to the electrode terminal 214 through a connecting member 23. When the tab 221 is a positive tab, the electrode terminal 214 may be a positive terminal; and when the tab 221 is a negative tab, the electrode terminal 214 may be a negative terminal.

In the battery cell 20, one or more electrode assemblies 22 may be provided according to actual usage requirements. For example, as shown in FIG. 3, one electrode assembly 22 is provided in the battery cell 20.

It should be understood that, in the embodiment of the present application, the plurality of battery cells 20 included in the battery 10 may be arranged and placed in any direction in the box 11. For example, the plurality of battery cells 20 may be arranged in the box in a thickness direction of the battery cells 20. In FIG. 2, two battery cells 20 are taken as an example, and in an actual application, the battery 10 may include other numbers of the battery cells 20.

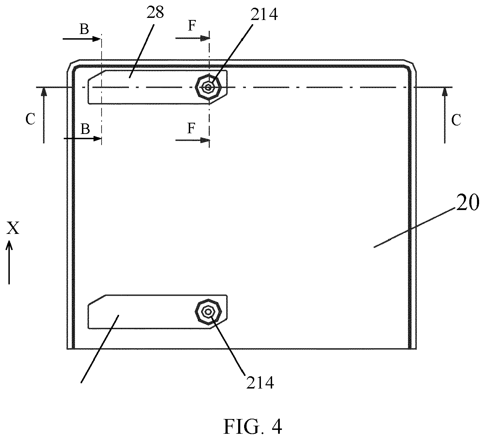

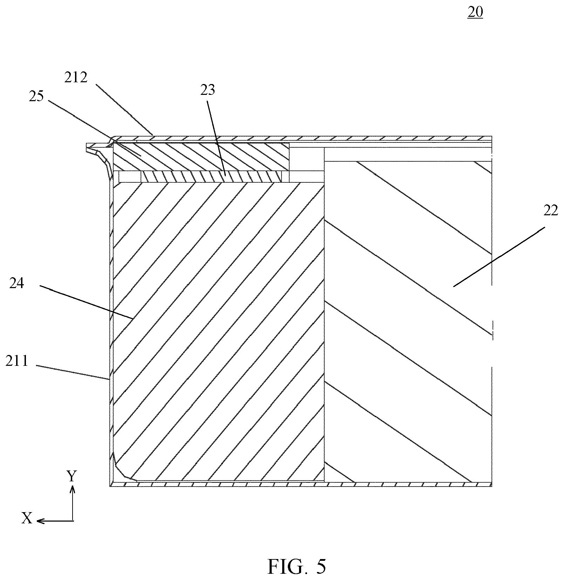

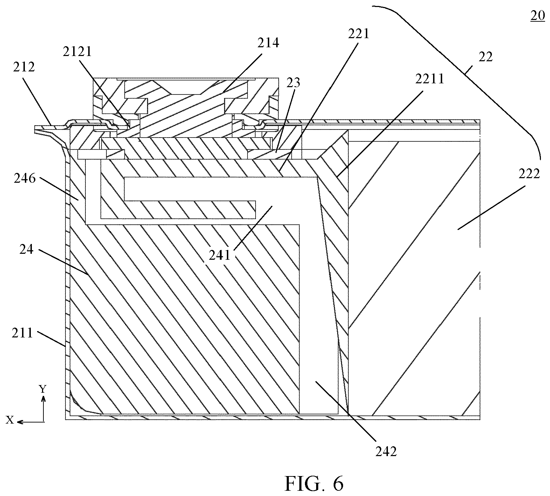

FIG. 4 is a top view of a battery cell 20 from an end cover 212 side. FIG. 5 is a partial sectional view of the battery cell 20 in a B-B direction in FIG. 4. FIG. 6 is a partial sectional view of the battery cell 20 in an F-F direction in FIG. 4. As shown in FIG. 4 and FIG. 5, in the battery cell 20, a housing 211 has an opening, an electrode assembly 22 is accommodated in the housing 211, and an end cover 212 covers the opening. An electrode terminal 214 is further disposed on the end cover 212. As shown in FIG. 5, the battery cell 20 further includes a support 24, the support 24 is disposed in the housing 211, the support 24 and the electrode assembly 22 are arranged in a first direction X, the support 24 and the end cover 212 are arranged in a second direction Y, and the first direction X is perpendicular to the second direction Y The support 24 abuts against the electrode assembly 22 in the first direction X to limit the electrode assembly 22.

The support 24 may be, for example, an insulating support, so as to prevent the electrode assembly 22 from short-circuiting with other components in the battery cell 20 while limiting the electrode assembly 22.

The support 24 and the electrode assembly 22 are arranged in the first direction X, which may mean that all or part of the electrode assembly 22 and the support 24 are arranged in the first direction X. When the support 24 and part of the electrode assembly 22 are arranged in the first direction X, the support 24 abuts against the part of the electrode assembly 22 in the first direction X, and the electrode assembly 22 can still be limited.

In an implementation manner, as shown in FIG. 6, an electrode assembly 22 includes an electrode body 222 and a tab 221. The support 24 and the electrode body 222 are arranged in a first direction X, while the tab 221 is not arranged with the support 24 in the first direction X, but partially overlaps with the support 24. The electrode assembly 22 includes a first electrode sheet, a second electrode sheet and a spacer, the first electrode sheet and the second electrode sheet have opposite polarities, and the spacer is configured to insulate and isolate the first electrode sheet from the second electrode sheet. The first electrode sheet includes a first coated region coated with a first active material layer and a first uncoated region not coated with the first active material layer, and the second electrode sheet includes a second coated region coated with a second active material layer and a second uncoated region not coated with the second active material layer. The electrode body 222 includes the first coated region, the second coated region, and the spacer. The tab 211 includes the first uncoated region and the second uncoated region. The first uncoated region may be a first tab, and the second uncoated region may be a second tab. The first tab and the second tab have opposite polarities.

In some embodiments, the electrode assembly 22 may be flat, and the outer surface of the electrode assembly 22 includes two flat surfaces arranged in the second direction Y. Alternatively, the electrode assembly 22 may be a winding structure, the first electrode sheet and the second electrode sheet are wound around a winding axis to form a winding structure, and the winding axis is consistent with the first direction X. Alternatively, the electrode assembly 22 may be a laminated structure, and a plurality of first electrode sheets and a plurality of second electrode sheets are alternately stacked in a second direction Y. Alternatively, the electrode assembly 22 adopts a laminated structure, the first electrode sheet is continuously bent and includes a plurality of stacked segments and a plurality of bending segments, the plurality of stacked segments and the plurality of second electrode sheets are alternately stacked in a second direction Y, and each bending segment is configured to connect two adjacent stacked segments.

Based on the foregoing structure of the electrode assembly 22, the support 24 and the electrode assembly 22 are arranged in the first direction X, which may mean that the support 24 and the electrode body 222 are arranged in the first direction X. At this time, as illustrated in FIG 6, the tab 221 of the electrode assembly 22 and the support 24 may at least partially overlap in the second direction Y

The end cover 212 may be, for example, a wall with the largest area among the walls of the battery cell 20. When the electrode assembly includes a flat surface arranged in the second direction Y, the flat surface of the electrode assembly 22 is substantially parallel to the end cover 212.

The electrode assembly 22 and the support 24 arranged in the first direction X are disposed in the housing 211 of the battery cell 20, and the end cover 212 of the battery cell is covered with the housing 211 in the second direction Y, so as to accommodate the support 24 and the electrode assembly 22 in the housing 211, thereby making the structure of the battery cell 20 more stable. Furthermore, since the support 24 abuts against the electrode assembly 22 in the first direction X, the electrode assembly 22 can be limited, thereby preventing the electrode assembly 22 from moving in the first direction X, and improving the structural stability of the battery cell 20.

In an implementation manner, as shown in FIG. 6, a tab 221 is provided at an end portion of the electrode assembly 22 in the first direction X, and the electrode terminal 214 of the battery cell 20 and the tab 221 of the electrode assembly 22 are disposed in the second direction Y. In this way, the electrode terminal 214 and the tab 221 may share a space in the second direction Y, which reduces space waste in the first direction X, thereby making the structure of the battery cell 20 more compact.

The electrode terminal 214 on the end cover 212 may, for example, protrude in the second direction Y and protrude from an electrode lead-out hole 2121 of the end cover 212.

In an implementation manner, as shown in FIG. 6, an accommodating groove 241 is provided on a side of the support 24 facing the end cover 212, and the accommodating groove 241 is configured to accommodate part of the tab 221.

As shown in FIG. 6, the support 24 is provided with an accommodating groove 241 configured to accommodate the tab 221. When the tab 221 is located in the accommodating groove 241, the tab 221 and the support 24 may share a space without occupying an extra space, so that the structure of the battery cell 20 is more compact, and the space utilization rate of the battery cell 20 is improved.

When the support 24 abuts against the electrode assembly 222 in the first direction X, part of the tab 221 may be damaged, for example, part of a gathered portion 2211 of the tab 221 may be damaged. To this end, in an implementation manner, in the first direction X, a width difference exists between a region of the support 24 abutting against the electrode assembly 22 and a region of the support 24 corresponding to the accommodating groove 241, so as to form an avoidance space 242 between the support 24 and the electrode assembly 22, and the avoidance space 242 is configured to accommodate part of the tab 221. In this way, an avoidance space 242 is designed in a region of the support 24corresponding to the accommodating groove 241 to accommodate a portion of the tab 221 abutting against the support 24, thereby avoiding the damage to the tab 221, and prolonging the service life of the battery cells 20.

For example, as shown in FIG. 6, the avoidance space 242 is located between the support 24 and the electrode assembly 22 in the first direction X, and the gathered portion 2211 of the tab 221 is accommodated therein, thereby avoiding the damage to the gathered portion 2211 of the tab 221, and prolonging the service life of the battery cell 20.

In an implementation manner, the support 24 further includes a blocking part 246, and the blocking part 246 is configured to isolate the tab 221 from the housing in the first direction X. For example, the blocking part 246 may be located on a side of the support 24 close to the housing 211 in the first direction X, so as to prevent a short circuit between the tab 221 and the housing 211.

In some embodiments, both end portions of the support 24 in a third direction and the blocking part 246 are disposed around the accommodating groove 241.

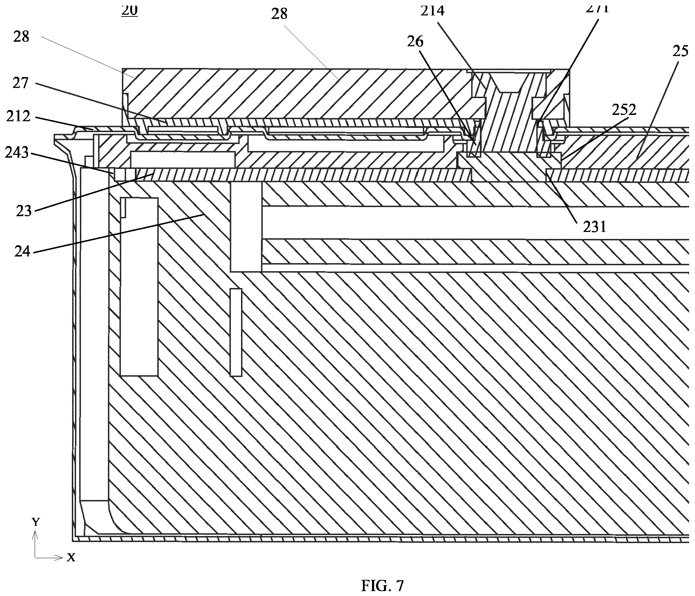

In an implementation manner, as shown in FIG. 6 and FIG. 7, FIG. 7 is a partial cross-sectional view of the battery cell 20 in FIG. 4 in a C-C direction. The battery cell 20 further includes a connecting member 23, and the connecting member 23 is configured to electrically connect the tab 221 of the electrode assembly 22 to the electrode terminal 214. The connecting member 23 may abut against an end face of the support 24 close to the end cover 212.

In this way, the connecting member 23 not only can achieve electrical connection between the tab 221 of the electrode assembly 22 and the electrode terminal 214, but also can abut against an end face of the support 24 close to the end cover 212 in the second direction Y, thereby preventing the support 24 from moving in the second direction Y, and improving the structural stability of the battery cell 20.

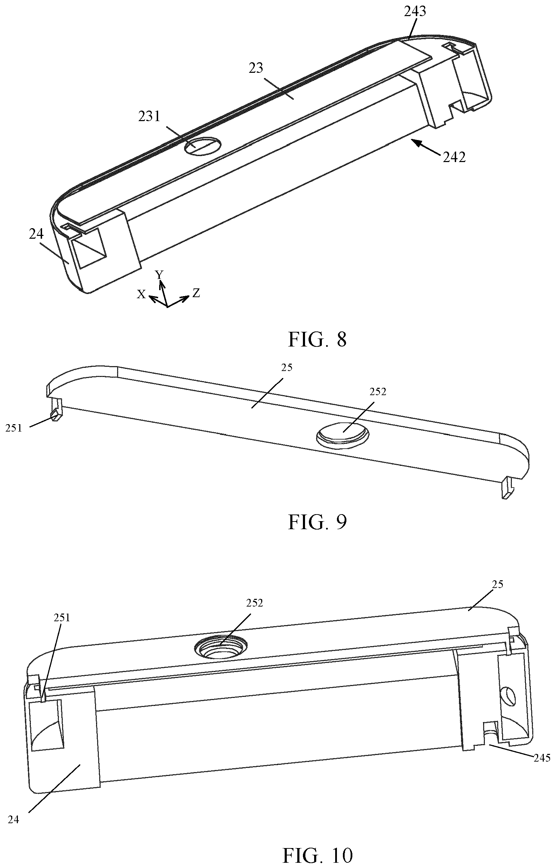

In an implementation manner, as shown in FIG. 8, the connecting member 23 may abut against two end portions of the support 24 in a third direction Z, and the first direction X, the second direction Y, and the third direction Z are perpendicular to each other, which can further improve stability of the support 24 in the battery cell 20.

In an implementation manner, as shown in FIG. 7 and FIG. 8, an opening 231 corresponding to the electrode terminal 214 may be provided on the connecting member 23, and the electrode terminal 214 passes through the opening 231, and finally protrudes on the end cover 212.

In an implementation manner, a protruding part 243 protruding towards the end cover 212 is provided on an end surface of the support 24 facing the end cover 212, and the protruding part 243 is configured to isolate the connecting member 23 from the housing 211. For example, as shown in FIG. 7 and FIG. 8, the protruding part 243 is located on a side of the support 24 close to the housing 211 in the first direction X, and surrounds a portion of the connecting member 23 that may be in contact with the housing 211, thereby isolating the connecting member 23 from the housing 211 of the battery cell 20, preventing a short-circuit between the connecting member 23 and the housing 211, and improving the safety of the battery cell 20.

In an implementation manner, as shown in FIG. 7, the battery cell 20 further includes a first insulating member 25. The first insulating member 25 is disposed between the connecting member 23 and the end cover 212 and is configured to isolate the end cover 212 from the connecting member 23, thereby preventing a short circuit between the end cover 212 and the connecting member 23 and improving the safety of the battery cell. The first insulating member 25 and the support 24 may be connected, for example, by a snap-fit manner.

FIG. 9 and FIG. 10 show a possible structure of a first insulating member 25. As shown in FIG. 9, the first insulating member 25 is provided with a snap 251. As shown in FIG. 10, the support 24 is provided with a notch 244, and the snap 251 on the first insulating member 25 is snap-fitted with the notch 244 on the support 24, so as to achieve the snap-fit connection between the first insulating member 25 and the support 24. This snap-fit manner not only implements fixation between the first insulating member 25 and the support 24, but also facilitates flexible detachment of the support 24.

Specifically, the snap 251 of the first insulating member 25 protrudes in the second direction Y, and the snap 251 may be placed into the notch 244 in the first direction X, so that the snap 251 is snap-fitted with the notch 244 in the second direction Y to fix the support 24 and the first insulating member 25.

For example, an opening 252 corresponding to the electrode terminal 214 may be disposed on the first insulating member 25 to pass through the electrode terminal 214.

In an implementation manner, as shown in FIG. 7, the battery cell 20 further includes a seal ring 26 configured to form a seal between the electrode terminal 214 and the end cover 212. The seal ring 26 may be ring-shaped, for example, and may be inserted into the electrode terminal 214 from the second direction Y

In an implementation manner, as shown in FIG. 7, the battery cell 20 further includes a second insulating member 27 configured to isolate the end cover 212 from a riveting block 28. The riveting block 28 is configured to fix the electrode terminal 214 disposed in a protruding manner on the end cover 212. For example, an opening 271 corresponding to the electrode terminal 214 may be provided on the second insulating member 27, and the electrode terminal 214 passes through the corresponding opening 271 to be connected to the riveting block 28.

In an implementation manner, as shown in FIG. 7, the support 24 is provided with an avoidance hole 245, and the avoidance hole 245 is disposed corresponding to a liquid injection hole of the battery cell 20 and is communicated with an inner portion of the battery cell 20. The setting of the avoidance hole can avoid the influence of the support on a liquid injection process of the battery cell.

In an implementation manner, as shown in FIG. 7, the liquid injection hole 245, for example, may be disposed on a first wall 2111 of the housing 211 away from the end cover 222, and few components are disposed on the first wall 2111 of the housing 211 away from the end cover 222, thereby facilitating liquid injection space required in the liquid injection process.

In the present application, a battery 10 is further provided, and the battery 10 includes the battery cell 20 in each of the foregoing embodiments.

According to an embodiment of the present application, a power consumption device is further provided. The power consumption device may include the battery cell 20 in each of the foregoing embodiments, so as to provide electric energy for the power consumption device. In some embodiments, the power consumption device may be a vehicle, ship or spacecraft.

By providing the battery 10 of the foregoing embodiment in the power consumption device, since the battery cell 20 in the battery 10 is provided with a support, and the support abuts against the electrode assembly, the structure of the battery cell is more stable, and the limiting of the electrode assembly is realized, thereby improving the structural stability of the battery cell.

The battery and the power consumption device of the embodiment of the present application are described above, and a method and device for producing a battery according to an embodiment of the present application will be described below, and the parts that are not described in detail can be referred to the foregoing embodiments.

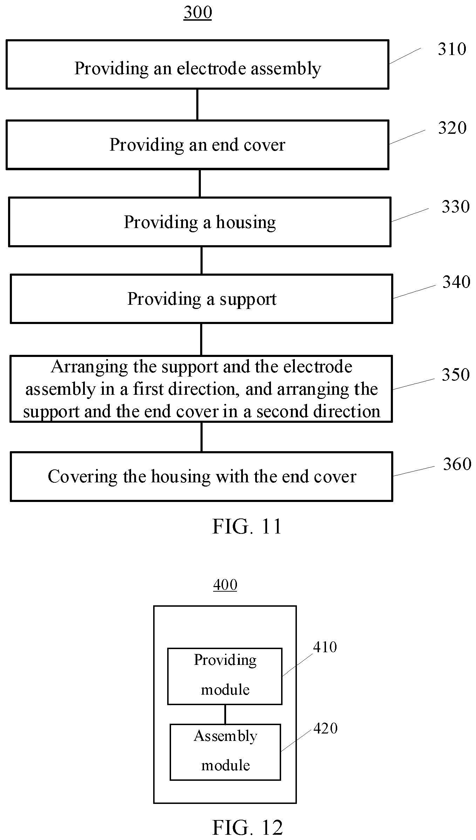

FIG. 11 shows a schematic flowchart of a method 300 for producing a battery according to an embodiment of the present application. As shown in FIG. 11, the method 300 may include:
Step 310: providing an electrode assembly 22;
Step 320: providing an end cover 212, the end cover 212 being provided with an electrode terminal 214;
Step 330: providing a housing 211, the housing 211 having an opening;
Step 340: providing a support 24;
Step 350: arranging the support 24 and the electrode assembly 22 in a first direction X, and arranging the support 24 and the end cover 212 in a second direction Y, where the first direction X is perpendicular to the second direction Y, and the support 24 abuts against the electrode assembly 22 in the first direction X so as to limit the electrode assembly 22; and
Step 360: covering the housing 211 with the end cover 212 to form a cavity for accommodating the electrode assembly 22 and the support 24.

It should be understood that the foregoing steps are merely exemplary, and in an actual assembly process, an order of the foregoing steps may be correspondingly adjusted according to an actual requirement. For example, an order of step 330 and step 340 may be exchanged, and an order of step 340 and step 320 may also be exchanged.

FIG. 12 shows a schematic block diagram of a device 400 for producing a battery according to an embodiment of the present application. As shown in FIG. 12, the device 400 for producing a battery may include:
a providing module 410, where the providing module 410 is configured to provide a housing 211, an electrode assembly 22, an end cover 212, and a support 24, the end cover 212 is provided with an electrode terminal 214, and the housing 211 has an opening; and
an assembly module 420, where the assembly module 420 is configured to arrange the support 24 and the electrode assembly 22 in a first direction X, and arrange the support and the end cover 212 in a second direction Y, where the first direction X is perpendicular to the second direction Y, the support 24 abuts against the electrode assembly 22 in the first direction X so as to limit the electrode assembly 22; and cover the end cover 212 with the opening of the housing 211, so as to accommodate the electrode assembly 22 and the support 24 in a cavity enclosed by the end cover 212 and the housing 211.

Although the present application has been described with reference to the preferred embodiments, various improvements may be made to the present application and the components therein may be replaced with equivalents without departing from the scope of the present application. In particular, as long as there is no structural conflict, various technical features mentioned in the various embodiments may be combined in any manner. The present application is not limited to the specific embodiments disclosed herein, and includes all technical solutions falling within the scope of the claims.

## Claims

1. A battery cell, comprising:
a housing having an opening;
an electrode assembly accommodated in the housing;
an end cover configured to cover the opening and provided with an electrode terminal; and
a support, disposed in the housing, wherein the support and the electrode assembly are arranged in a first direction, the support and the end cover are arranged in a second direction, and the first direction is perpendicular to the second direction, the support abuts against the electrode assembly in the first direction so as to limit the electrode assembly.

2. The battery cell according to claim 1, wherein a tab is provided at an end portion of the electrode assembly in the first direction, and the electrode terminal and the tabare disposed in the second direction.

3. The battery cell according to claim 2, wherein an accommodating groove is provided on a side of the support facing the end cover, and the accommodating groove is configured to accommodate part of the tab.

4. The battery cell according to claim 3, wherein in the first direction, a width difference exists between a region of the support abutting against the electrode assembly and a region of the support corresponding to the accommodating groove, so as to form an avoidance space between the support and the electrode assembly, wherein the avoidance space is configured to accommodate part of the tab.

5. The battery cell according to any one of claims 1 to 4, wherein the support further comprises a blocking part, and the blocking part is configured to isolate the tab of the electrode assembly from the housing in the first direction.

6. The battery cell according to any one of claims 1 to 5, wherein the battery cell further comprises:
a connecting member, wherein the connecting member is configured to electrically connect the tab of the electrode assembly to the electrode terminal, and the connecting member abuts against an end face of the support close to the end cover.

7. The battery cell according to claim 6, wherein a protruding part protruding toward the end cover is provided on an end face of the support facing the end cover, and the protruding part is configured to isolate the connecting member from the housing.

8. The battery cell according to claim 6 or 7, wherein the battery cell further comprises:
a first insulating member disposed between the connecting member and the end cover and configured to isolate the end cover from the connecting member, the first insulating member being connected to the support in a snap-fit manner.

9. The battery cell according to claim 8,
wherein the first insulating member is provided with a snap, and the support is provided with a notch, and the snap is snap-fitted with the notch so as to connect the first insulating member to the support in a snap-fit manner.

10. The battery cell according to any one of claims 1 to 9, wherein the support is provided with an avoidance hole, and the avoidance hole is disposed corresponding to a liquid injection hole of the battery cell and is communicated with an inner portion of the battery cell.

11. The battery cell according to claim 10, wherein the liquid injection hole is disposed on a first wall of the housing away from the end cover.

12. A battery, comprising: the battery cell according to any one of claims 1 to 11.

13. A power consumption device, comprising: the battery cell according to any one of claims 1 to 11, the battery cell being configured to provide electric energy.

14. A method for producing a battery cell, comprising:
providing an electrode assembly;
providing an end cover, the end cover being provided with an electrode terminal;
providing a housing, the housing having an opening;
providing a support;
arranging the support and the electrode assembly in a first direction, and arranging the support and the end cover in a second direction, wherein the first direction is perpendicular to the second direction, the support abuts against the electrode assembly in the first direction so as to limit the electrode assembly; and
covering the housing with the end cover to form a cavity for accommodating the electrode assembly and the support.

15. A device for producing a battery cell, comprising:
a providing module, wherein the providing module is configured to provide a housing, an electrode assembly, an end cover, and a support, the end cover is provided with an electrode terminal, and the housing has an opening; and
an assembly module, configured to:
arrange the support and the electrode assembly in a first direction, and arrange the support and the end cover in a second direction, wherein the first direction is perpendicular to the second direction, the support abuts against the electrode assembly in the first direction so as to limit the electrode assembly; and
cover the end cover with the opening, so as to accommodate the electrode assembly and the support in a cavity enclosed by the end coverand the housing.
